# EUROPEAN PATENT SPECIFICATION

(11) **EP 2 161 434 B1**
(45) Date of publication and mention of the grant of the patent: **14.12.2011**
(21) Application number: 09169643.5
(22) Date of filing: 07.09.2009
(51) Int. Cl.: F02D 13/02, F01L 1/344, F01L 13/00

(54) **Mechanical device for the phase and lifting variation of the valves in an internal combustion engine**
Mechanische Vorrichtung zur Änderung der Phase und der Anhebung von Ventilen in Verbrennungsmotoren
Dispositif mécanique pour la variation de phase et de levage des soupapes dans un moteur à combustion interne

(30) Priority: 09.09.2008 IT MI20081605
(43) Date of publication of application: 10.03.2010
(73) Proprietor: PIAGGIO & C. S.p.A., 56025 Pontedera (Pisa) (IT)
(72) Inventor: Nesti, Paolo, 56010 Ghezzano (Pisa) (IT)
(74) Representative: Coletti, Raimondo

(56) References cited:
- WO-A-2006/014098
- DE-A1- 2 950 656
- JP-A- 5 026 017
- JP-A- 60 147 512

## Description

The present invention refers to an automatic mechanical device for the phase and lifting variation of the valves in an internal combustion engine, able to be applied in particular to motor vehicles provided with engines in which the valves are controlled by the camshaft by means of rocker arms.

Variable phasing systems of the distribution on four-stroke internal combustion engines are made for the purpose of increasing performance, reducing emissions, in particular of unburned hydrocarbons, and improving the regularity of the engine at low operating speeds with low loads and just idling.

The variator device modifies the phasing between the drive shaft and the camshaft that actuates the valves. Its task is to vary the movement of the valves according to the power delivered and the number of revolutions and it is used to gain more effective control of polluting emissions, in particular when high performance is required, and to achieve better regularity of operation when the engine is idling or when the throttle valve is only a little open. In the latter situation, the pressure of the exhaust gases is greater than that inside the combustion chamber, and therefore the exhaust gases enter into the intake pipes, polluting the air-petrol mixture, with the result of making the operation of the engine itself more irregular. Without the variator, in an engine with sports phasing, with low loads and at the minimum rotation speed, up to 40% of the chamber would be occupied by burnt gases instead of the fresh air-petrol mixture.

Phase varying devices, in particular electronically controlled ones, allow the requirements of the engine to be satisfied in an optimal manner at all rotation speeds, without having to make penalising compromises. Indeed, the variator influences the crossover angle of the valves, which corresponds to the rotation range of the drive shaft during which both the intake valves and the exhaust valves stay open. Simultaneously the crossover is caused by the delayed closing of the exhaust and the early opening of the intake. This occurs when the piston is located at the Top Dead centre, at the start of the intake phase and at the end of the exhaust phase. In some cases, particularly at high revs, a small crossover angle would reduce the duration of the intake phase of the fresh mixture and the discharge phase of the burnt gases, preventing the cylinders from filling optimally, with the result that the power delivered by the engine would be less than what can normally be obtained. Indeed, with high loads (open throttle), opening the intake valves early, i.e. having a large value of the crossover angle, allows the filling of the cylinders to be improved, thus obtaining greater torque with a substantial gain at all operating speeds. On the other hand, an excessive crossover can cause irregular operation of the engine at low revs and with low loads, particularly at the minimum, with backfiring, wastage of unburned fuel that would come out from the exhaust valves and consequently an increase in polluting emissions, as well as the risk of deterioration of the catalyst.

Summarising, it can therefore be said that the phase variator, if managed correctly, offers the advantage of being able to make a low crossover angle when the engine operates at low operating speeds, to reduce the emissions of hydrocarbons and ensure that the engine has a good quality idle speed. In some cases this phasing with a small crossover angle is also used at very high operating speeds, using the advantage of the delayed closing to obtain the highest performance in this operating area of the engine. In the intermediate range of revs the position of the variator can also depend upon the amount that the throttle is open. The variable phasing distribution system described up to now, known as "first generation", is now widely used in high performance engines produced by most of the automobile industry.

The most evolved current variable phasing distribution systems, applied to so-called "second generation" automobile engines, foresee devices that optimise the performance characteristics of the engine, suitably modifying both the phasing and the lifting of the valves in the various operating points of the engine. With these possibilities, it is clearly easier to combine, in the same engine, very good performance characteristics with characteristics of good behaviour when idling and in the presence of partial loads, with the maximum advantages in terms of yield and reduction of polluting emissions.

Variable phasing system were devised and developed mainly with reference to automobile engines, which were the first to have to tackle the problems of antipollution standards, in particular on the American market since the 1980s.

In the field of two or three-wheeled motor vehicles the same problems surfaced roughly ten years later and the problem has been partially dealt with, by intervening mainly on the treatment of the exhaust gases in the exhaust pipe, with catalysts and secondary air and, more recently, with the adoption of injection units like those in the automobile industry or units deriving from them.

The purpose of the present invention is therefore to make an automatic mechanical device for the phase and lifting variation of the valves in an internal combustion engine, particularly intended for use in a motor vehicle, which is lighter, more compact, cost-effective and easier to build and maintain compared to the solutions currently known in the automobile industry.

Another purpose of the invention is to make an automatic mechanical device for the phase and lifting variation of the valves in an internal combustion engine that is able to meet the most restrictive antipollution standards in force in most industrialised countries, with particular reference to the motor vehicle category.

Yet another purpose of the invention is to make an automatic mechanical device for the phase and lifting variation of the valves in an internal combustion engine that is compatible with the need to make engines, particularly for motorcycling, with increasingly high performance.

These purposes according to the present invention are accomplished by making an automatic mechanical device for the phase and lifting variation of the valves in an internal combustion engine as outlined in claim 1. Further characteristics of the invention are highlighted by the dependent claims, which are an integral part of the present description.

The characteristics and advantages of an automatic mechanical device for the phase and lifting variation of the valves in an internal combustion engine of the present invention shall become clear from the following description, given as an example and not for limiting purposes, referring to the attached schematic drawings, in which:
- figure 1 is a section view of the complete head of an internal combustion engine provided with an automatic mechanical device for the phase and lifting variation of the valves not forming part of the present invention;
- figure 2 is a diagram that shows in detail how the phase variation is carried out through the device illustrated in figure 1;
- figure 3 is a section view obtained along the line A of figure 1, which shows in detail how the phase variation is carried out through the device illustrated in figure 1;
- figure 4 is a section view of the complete head of an internal combustion engine provided with an embodiment of an automatic mechanical device for the phase and lifting variation of the valves according to the invention;
- figure 4A is a section view of the camshaft, obtained along the line B of figure 4; and
- figures 5 and 6 are two different section views, obtained along the line B of figure 4, of the distribution system of an engine provided with the device of figure 4.

Firstly, it should be specified that all of the example embodiments of the devices illustrated in the figures, described in detail later on, can be applied to engines with one or more cylinders, as well as to heads provided either with two or four valves for each cylinder.

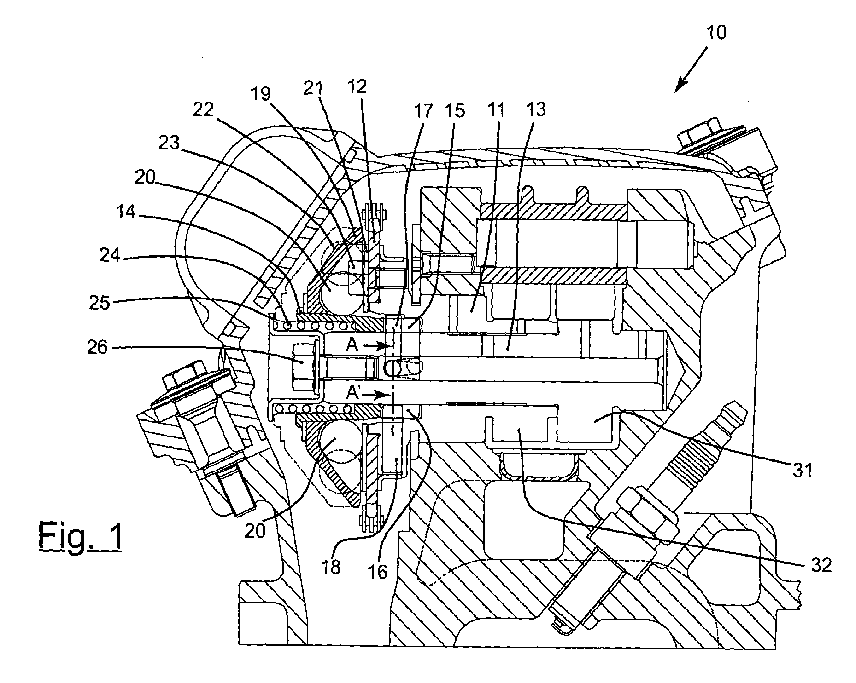

Figure 1 shows the section view of the complete head of an internal combustion engine 10, with the device for adjusting the phase of the valves, of the centrifugal type with double helix grooved bush, arranged at one end of the camshaft to control the valves.

In particular, in figure 1 it can be seen how the camshaft is made up of two pieces, where the fixed (exhaust) cam 32 is fixedly connected to a first half-shaft 11 on which the timing ring gear 12 is fitted, whereas the mobile part of the second half-shaft 13, fixedly connected to the intake cam 31 that will be actuated by the adjustment device, is housed and guided inside the fixed part 11.

The connection between the two cam half-shafts 11 and 13 is made by a bush 14 with preferably helical grooved toothing, which carries out the angular displacement between the two cams 31 and 32 when the centrifugal adjustment device forces the bush to move axially.

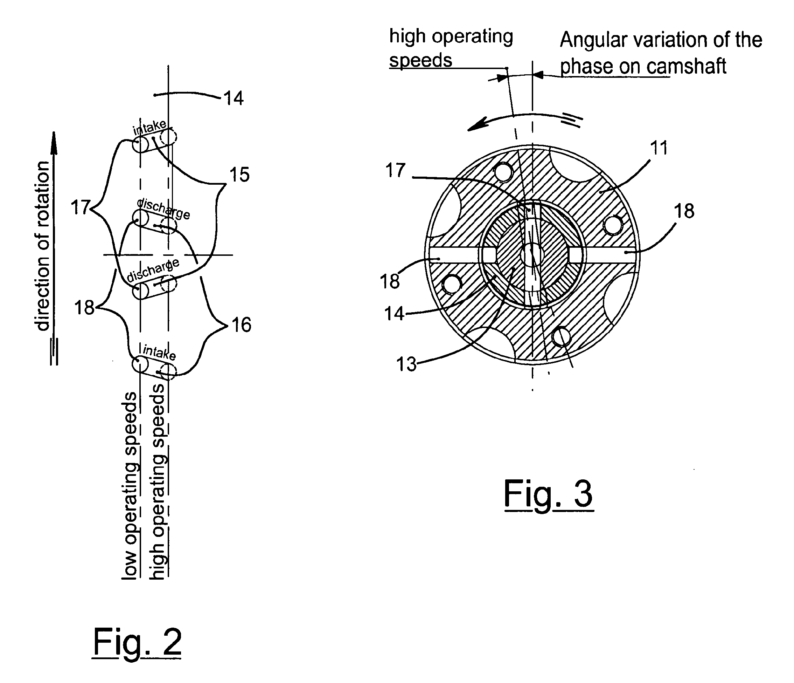

As also highlighted in figures 2 and 3, two pairs of helical grooves 15 and 16, arranged at 90°, are formed on the bush 14, where the pins 17 and 18 engage, respectively housed in the two half-shafts 11 and 13. This particular solution has been adopted instead of the classic helical toothing, due to the low axial space available. Indeed, the single groove, for the same pitch, would need a double axial displacement.

The pitch of the helical grooves 15 and 16 is selected based on the friction angle, and it is preferable for the coupling to be reversible to avoid the reactions caused by torque peaks coming from the camshaft when the valve lifts, in particular when a gradual phase variation law is selected.

The automatic device comprises a centrifugal adjustment unit made up of a container 19 for one or more masses 20 that slide radially on a counter wall 21 fitted, by means of screws 22 and together with the timing ring gear 12, onto the cam half-shaft 11.

The wall 21, made in the form of a plate, has folded appendices 23 that radially restrain the container 19 for the masses 20. The adjustment unit is completed with a counter spring 24 and a relative cap 25, locked onto the half-shaft 13 by the screw 26.

The elastic characteristic of the spring 24, combined with the shape of the track formed on the container 19 where the mobile masses 20 work, determines the intervention revolutions and the duration of the phase variation.

Therefore, the phase variation is obtained when, at the predetermined rotation speed and through centrifugal force, the masses 20 that work on the inclined surface of the container 19 overcome the preloading of the spring 24 to go towards the limit switch formed at the end of the track on the container 19 itself. The movement of the masses 20 causes the axial sliding, in the direction of the central rotation axis of the camshaft, of the container 19 and of the grooved bush 14.

The helical grooves 15 and 16 of the bush 14 force the pins 17 and 18 inserted in them to make an angular displacement, transmitting this rotation to the half-shaft 13 and then to the cam 31 integral with it.

Based on this example embodiment, it is possible to obtain, with a relatively simple adjustment device, the phase variation of one of the two cams 31 and 32 (according to the characteristics of the engine 10) and thus to go from a diagram with low crossover at low operating speeds, with advantages in terms of consumption and pollution, to a diagram with greater crossover, to have performance advantages at high operating speeds (figure 2). Therefore, by suitably calibrating the centrifugal adjustment unit described above, the phase variation can be achieved in a reduced or gradual range of number of revolutions.

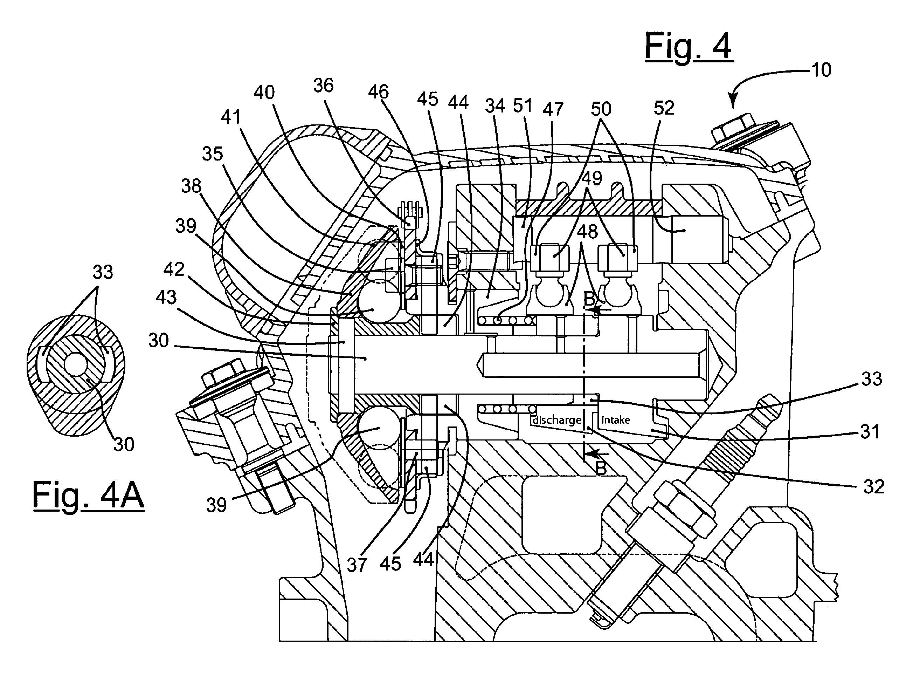

Figures 4, 5 and 6 show the complete head of an internal combustion engine 10 provided with an example embodiment of the device according to the invention for the phase and lifting variation of the intake and exhaust valves, with the possibility of simultaneous variation of the phase of one or both of the cams 31 and 32 even by different amounts. The solution for variation of lifting requires the use of conical cams and the rocker arm-cam coupling with ball joint.

Also in this case, the engine 10 is provided with a camshaft consisting of two components, where the central component keeps the whole unit aligned and guided and it consists of a first shaft 30 where, at one end, the support housed on the head is obtained. The camshaft thus comprises a conical intake cam 31, integral or attached with stable coupling on the first shaft 30.

The other conical (exhaust) cam 32 is mounted in such a way as to be free to rotate with respect to the shaft 30 and it is angularly restrained, with some straight or helical grooves 33 (according to whether or not it is wished to have variation of the phase of this cam 32), to the other component 34 of the camshaft. Such a component 34 has the other support housed on the head and has the timing ring gear 36, timely phased by means of the adjusting screw 37, fixed onto it, by means of the screws 35.

As outlined earlier in relation to the example embodiment wherein the variation of the cam phase only can be performed, the centrifugal automatic adjustment device has a special shape for reasons of bulk and it consists of a container 38 for one or more masses 39 that slide radially on a counter wall or plate 40 fitted, by means of the screws 35 and together with the timing ring gear 36, to the fixed part of the component 34 of the camshaft.

The plate 40 has folded appendices 41 that radially restrain the container 38 for the masses 39. A grooved bush 42 is restrained to the central shaft 30 with a pin 43, whereas the grooves 44 formed at the end, which can be helical or straight (according to whether or not it is wished to have variation of the phase of the cam 31 integral with the shaft 30), have the pins 45 inserted in them, housed inside the element 34 and contained by a cap 46.

The counter spring 47 of the adjustment device, suitably calibrated, keeps the two components 30 and 34 of the camshaft preloaded in clearance recovery and maximum extension position, with the articulated tappet made up of a sliding block 48 housed in a pin with spherical head 49 integral on the other side with the end of the rocker arms 50 which work on the minimum lifting dimension of the cams 31 and 32.

The variation in lifting is obtained when, through centrifugal force, the masses 39 that work on the inclined surface of the track of the container 38 overcome the preloading of the spring 47 to go towards the outer limit switch, causing the axial sliding of the entire central equipment made up of the grooved bush 42, the shaft 30 and the two cams 31 and 32 connected to it. The cams 31 and 32, translating, will work in the maximum lifting position with respect to the articulated tappets of the rocker arms, which stay axially restrained on the respective pins 51 and 52 in the same position.

The phase variation occurs at the same time as the lifting variation and it is caused by the helical grooves 44 present on the bush 42, through the cam 31 fitted on the central shaft 30, and directly on the cam 32, restrained to the element 34 integral with the timing ring gear 36.

It is easy to imagine that the extent of the rotation, and therefore the extent of the phase variation, depends upon the extent of the translation and the inclination of the helical grooves 44. The inclination of such helical grooves 44 can be made to be different for the two cams 31 and 32, up to the point of being placed at zero when the grooves 44 themselves are rectilinear. The figures therefore represent just one of the possible constructive solutions.

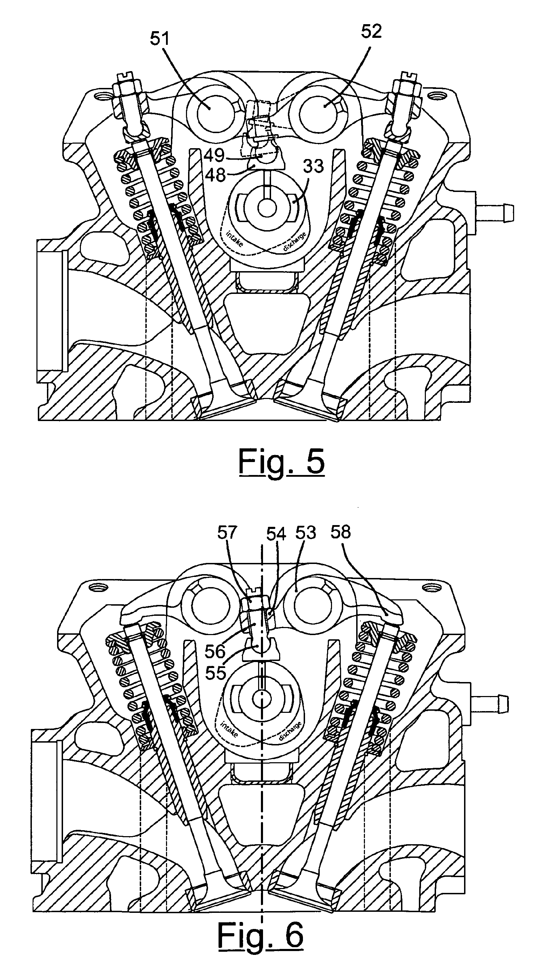

In particular, examining figure 5, it can be seen how each rocker arm 50, at its end on the valve side, is provided with a ball joint with an attached register for adjusting the clearance of the valve itself. Depending upon the constructive requirements, as shown in figure 6, this adjustment function could be transported onto the ball joint on the cam side, using a rocker arm 53 where, on the cam side, an internally threaded end 54 is formed for housing a ball joint 55, provided with an externally threaded stem 56 to engage with such an end 54, and with a nut 57 for the adjustment of the valve clearance. On the valve side, on the other hand, a finger contact 58 is formed, with advantages of simplicity and lightness for the rocker arm 53.

Compared to the example embodiment illustrated in figures 1-3, the device of figures 4-6 is much more complex, especially if all of the potentialities on offer are used. However, the benefits offered in terms of overall yield of the engine 10 are also of greater quality. Like in the first example embodiment, the device is actuated by a centrifugal adjuster, and therefore the intervention threshold must be chosen carefully.

It has thus been seen that the automatic mechanical device for the phase and lifting variation of the valves in an internal combustion engine according to the present invention, intended particularly for application to motor vehicles, achieves the purposes outlined earlier.

The automatic mechanical device for the phase and lifting variation of the valves in an internal combustion engine of the present invention thus conceived can in any case undergo numerous modifications and variants, all of which are covered by the inventive concept; moreover, all the details can be replaced by technically equivalent elements. In practice, the materials used, as well as the shapes and sizes, can be whatever according to the technical requirements.

The scope of protection of the invention is therefore defined by the attached claims.

## Claims

1. Device for the phase and lifting variation of the valves in an internal combustion engine (10) of the type comprising at least one valve control camshaft, made up of a first component (34), operationally connected to at least a first cam (32), and of a second component (30), operationally connected to at least a second cam (31), said first component (34) and second component (30) of the camshaft being connected to each other by means of a bush (42), **characterised in that** it comprises a centrifugal adjustment unit comprised of a container (38) for one or more masses (39) which radially slide on a counter wall (40) integral with said first component (34) of the camshaft, the movement of said masses (39) causing the axial sliding, in the direction of said camshaft, of said container (38) and said bush (42) to realise the displacement of said first component (34) and/or said second component (30) and of said cams (31, 32) operationally connected to said components.

2. Device according to claim 1, **characterised in that** said bush (42) is provided with a helicoidal or straight groove toothing (44) to realise the angular displacement between said cams (31, 32) when said centrifugal adjustment unit causes the axial sliding of said bush (42).

3. Device according to claim 2, **characterised in that** one or more grooves (44) are made at an end of said bush (42), in said one or more grooves (44) one or more pins (45), housed in said first component (34) of the camshaft and contained by a cap (46), being respectively engaged.

4. Device according to claim 1, **characterised in that** said counter wall (40) is provided with folded appendices (41) which radially restrain said container (38).

5. Device according to claim 4, **characterised in that** said counter wall (40) is fitted together on said first component (34) of the camshaft, by means of at least one fixing member (35), together with the timing ring gear (36) of the engine (10).

6. Device according to claim 1, **characterised in that** said adjustment unit comprises at least one counter spring (47) which keeps said first component (34) and said second component (30) preloaded in clearance recovery and maximum extension position.

7. Device according to claim 1, **characterised in that** said first cam (32) is mounted so as to freely rotate with respect to said second component (30) of the camshaft and is angularly restrained, through one or more straight or helicoidal grooves (33), to said first component (34) of the camshaft.

8. Device according to claim 7, **characterised in that** on said first component (34) of the camshaft is fixed, by means of at least one fixing member (35), the timing ring gear (36) of the engine (10), timely phased by means of an adjusting screw (37).

9. Device according to any of claims from 1 to 8, **characterised in that** the tappet of each cam (31, 32) comprises a ball joint made up of a sliding block (48) housed in a pin with spherical head (49) integral with an end of the rocker arms (50) which work on the minimum lifting dimension of said cams (31, 32).

10. Device according to claim 9, **characterised in that** each rocker arm (50), at its end on the valve side, is provided with a ball joint with an attached register for the adjustment of the clearance of said valve.

11. Device according to anyone of claims from 1 to 8, **characterised in that** the tappet of each cam (31, 32) comprises a rocker arm (53) provided, on the cam side, with a internally threaded end (54) for the housing of a ball joint (55).

12. Device according to claim 11, **characterised in that** said ball joint (55) is provided with an externally threaded stem (56), which engages with said internally threaded end (54), and with a nut (57) for the adjustment of the clearance of each valve.

13. Device according to any of claims from 9 to 12, **characterised in that** said cams (31, 32) are of conical type.

14. Device according to any one of the previous claims, **characterised in that** said centrifugal adjustment unit is arranged at an end of the camshaft.

## Patentansprüche

1. Vorrichtung zur Veränderung von Phase und Hub der Ventile in einer Brennkraftmaschine (10) von dem Typ, der zumindest eine Ventilsteuernockenwelle umfasst, die aus einer ersten Komponente (34), die funktional mit zumindest einem ersten Nocken (32) verbunden ist, und einer zweiten Komponente (30), die funktional mit zumindest einem zweiten Nocken (31) verbunden ist, besteht, wobei die erste Komponente (34) und die zweite Komponente (30) der Nockenwelle miteinander mittels einer Buchse (42) verbunden sind,
**dadurch gekennzeichnet, dass**
sie eine Fliehkraft-Einstelleinheit umfasst, die aus einem Behälter (38) für eine oder mehrere Massen (39) besteht, die radial an einer Gegenwand (40), die integral mit der ersten Komponente (34) der Nockenwelle ist, gleiten, wobei die Bewegung der Massen (39) das axiale Gleiten des Behälters (38) und der Buchse (42) in der Richtung der Nockenwelle bewirkt, um die Verschiebung der ersten Komponente (34) und/oder der zweiten Komponente (30) und der Nocken (31, 32), die funktional mit den Komponenten verbunden sind, zu realisieren.

2. Vorrichtung nach Anspruch 1,
**dadurch gekennzeichnet, dass**
die Buchse (42) mit einer Verzahnung (44) mit gewendelten oder geraden Rillen versehen ist, um die winklige Verschiebung zwischen den Nocken (31, 32) zu realisieren, wenn die Fliehkraft-Einstelleinheit das axiale Gleiten der Buchse (42) bewirkt.

3. Vorrichtung nach Anspruch 2,
**dadurch gekennzeichnet, dass**
die eine oder mehreren Rillen (44) an einem Ende der Buchse (42) hergestellt sind, wobei in der einen oder den mehreren Rillen (44) jeweils ein oder mehrere Stifte (45) in Eingriff stehen, die in der ersten Komponente (34) der Nockenwelle untergebracht und durch eine Kappe (46) umfasst sind.

4. Vorrichtung nach Anspruch 1,
**dadurch gekennzeichnet, dass**
die Gegenwand (40) mit umgeschlagenen Fortsätzen (41) versehen ist, die den Behälter (38) radial festhalten.

5. Vorrichtung nach Anspruch 4,
**dadurch gekennzeichnet, dass**
die Gegenwand (40) gemeinsam an der ersten Komponente (34) der Nockenwelle mittels zumindest eines Befestigungselements (35) gemeinsam mit dem Zeitsteuer-Zahnkranz (36) der Maschine (10) befestigt ist.

6. Vorrichtung nach Anspruch 1,
**dadurch gekennzeichnet, dass**
die Einstelleinheit zumindest eine Gegenfeder (47) umfasst, die die erste Komponente (34) und die zweite Komponente (30) in einer Position einer Spielwiederherstellung und maximalen Ausdehnung vorbelastet hält.

7. Vorrichtung nach Anspruch 1,
**dadurch gekennzeichnet, dass**
der erste Nocken (32) befestigt ist, um sich frei mit Bezug auf die zweite Komponente (30) der Nockenwelle zu drehen und winklig durch eine oder mehrere gerade oder gewendelte Rillen (33) an der ersten Komponente (34) der Nockenwelle festgehalten ist.

8. Vorrichtung nach Anspruch 7,
**dadurch gekennzeichnet, dass**
an der ersten Komponente (34) der Nockenwelle mittels zumindest eines Befestigungselements (35) das Zeitsteuer-Zahnkranz (36) der Maschine (10) befestigt ist, der mittels einer Stellschraube (37) zeitlich phasenverschoben wird.

9. Vorrichtung nach einem der Ansprüche 1 bis 8,
**dadurch gekennzeichnet, dass**
der Stößel jedes Nockens (31, 32) ein Kugelgelenk umfasst, das aus einem Gleitblock (48) besteht, der in einem Stift mit Kugelkopf (49) untergebracht ist, der integral mit einem Ende der Kipphebel (50) ist, die an der Abmessung mit minimalem Hub der Nocken (31, 32) arbeiten.

10. Vorrichtung nach Anspruch 9,
**dadurch gekennzeichnet, dass**
jeder Kipphebel (50) an seinem Ende auf der Ventilseite mit einem Kugelgelenk mit einer angebrachten Registereinrichtung für die Einstellung des Spiels des Ventils versehen ist.

11. Vorrichtung nach einem der Ansprüche 1 bis 8,
**dadurch gekennzeichnet, dass**
der Stößel jedes Nockens (31, 32) einen Kipphebel (53) umfasst, der an der Nockenseite mit einem Innengewindeende (54) für die Unterbringung eines Kugelgelenks (55) versehen ist.

12. Vorrichtung nach Anspruch 11,
**dadurch gekennzeichnet, dass**
das Kugelgelenk (55) mit einem Außengewindeschaft (56) versehen ist, der mit dem Innengewindeende (54) und mit einer Mutter (57) für die Einstellung des Spiels jedes Ventils in Eingriff steht.

13. Vorrichtung nach einem der Ansprüche 9 bis 12,
**dadurch gekennzeichnet, dass**
die Nocken (31, 32) von einem konischen Typ sind.

14. Vorrichtung nach einem der vorhergehenden Ansprüche,
**dadurch gekennzeichnet, dass**
die Fliehkraft-Einstelleinheit an einem Ende der Nockenwelle angeordnet ist.

## Revendications

1. Dispositif pour la variation de phase et de levée des soupapes dans un moteur à combustion interne (10) du type comprenant au moins un arbre à cames de commande de soupapes, composé d'un premier composant (34), relié fonctionnellement à au moins une première came (32), et d'un second composant (30), relié fonctionnellement à au moins une seconde came (31), ledit premier composant (34) et ledit second composant (30) de l'arbre à cames étant reliés l'un à l'autre au moyen d'une douille (42), **caractérisé en ce qu'**il comprend une unité de réglage centrifuge composée d'un contenant (38) pour une ou plusieurs masses (39) qui coulissent radialement sur une contre-paroi (40) solidaire dudit premier composant (34) de l'arbre à cames, le mouvement desdites masses (39) entraînant le coulissement axial, dans la direction dudit arbre à cames, dudit contenant (38) et de ladite douille (42) pour réaliser le déplacement dudit premier composant (34) et/ou dudit second composant (30) et desdites cames (31, 32) reliées fonctionnellement auxdits composants.

2. Dispositif selon la revendication 1, **caractérisé en ce que** ladite douille (42) est pourvue d'une denture à rainures hélicoïdales ou droites (44) pour réaliser le déplacement angulaire entre lesdites cames (31, 32) lorsque ladite unité de réglage centrifuge entraîne le coulissement axial de ladite douille (42).

3. Dispositif selon la revendication 2, **caractérisé en ce qu'**une ou plusieurs rainures (44) sont réalisées à une extrémité de ladite douille (42), une ou plusieurs goupilles (45), logées dans ledit premier composant (34) de l'arbre à cames et contenues par un couvercle (46), étant respectivement engagées dans ladite une ou plusieurs rainures (44).

4. Dispositif selon la revendication 1, **caractérisé en ce que** ladite contre-paroi (40) est pourvue d'appendices pliés (41) qui retiennent radialement ledit contenant (38).

5. Dispositif selon la revendication 4, **caractérisé en ce que** ladite contre-paroi (40) est installée sur ledit premier composant (34) de l'arbre à cames, au moyen d'au moins un élément de fixation (35), conjointement avec la couronne dentée de distribution (36) du moteur (10).

6. Dispositif selon la revendication 1, **caractérisé en ce que** ladite unité de réglage comprend au moins un contre-ressort (47) qui maintient ledit premier composant (34) et ledit second composant (30) préalablement chargés dans une position de récupération de jeu et d'extension maximum.

7. Dispositif selon la revendication 1, **caractérisé en ce que** ladite première came (32) est montée afin de tourner librement par rapport audit second composant (30) de l'arbre à cames et est retenue angulairement, par l'intermédiaire d'une ou de plusieurs rainures droites ou hélicoïdales (33), sur ledit premier composant (34) de l'arbre à cames.

8. Dispositif selon la revendication 7, **caractérisé en ce que**, sur ledit premier composant (34) de l'arbre à cames est fixée, au moyen d'au moins un élément de fixation (35), la couronne dentée de distribution (36) du moteur (10), mise en phase opportune au moyen d'une vis de réglage (37).

9. Dispositif selon une quelconque des revendications 1 à 8, **caractérisé en ce que** le poussoir de chaque came (31, 32) comprend un joint à bille composé d'un bloc coulissant (48) logé dans une goupille avec une tête sphérique (49) solidaire d'une extrémité des culbuteurs (50) qui agissent sur la dimension de levée minimum desdites cames (31, 32).

10. Dispositif selon la revendication 9, **caractérisé en ce que** chaque culbuteur (50), à son extrémité sur le côté soupape, est pourvu d'un joint à bille avec un repérage attaché pour le réglage du jeu de ladite soupape.

11. Dispositif selon une quelconque des revendications 1 à 8, **caractérisé en ce que** le poussoir de chaque came (31, 32) comprend un culbuteur (53) pourvu, sur le côté came, d'une extrémité à filetage intérieur (54) pour le logement d'un joint à bille (55).

12. Dispositif selon la revendication 11, **caractérisé en ce que** ledit joint à bille (55) est pourvu d'une tige à filetage extérieur (56), qui entre en prise avec ladite extrémité à filetage intérieur (54), et avec un écrou (57) pour le réglage du jeu de chaque soupape.

13. Dispositif selon une quelconque des revendications 9 à 12, **caractérisé en ce que** lesdites cames (31, 32) sont de type conique.

14. Dispositif selon une quelconque des revendications précédentes, **caractérisé en ce que** ladite unité de réglage centrifuge est agencée à une extrémité de l'arbre à cames.
